# EUROPÄISCHE PATENTSCHRIFT

(11) **EP 3 599 849 B1**
(45) Veröffentlichungstag und Bekanntmachung des Hinweises auf die Patenterteilung: **01.09.2021**
(21) Anmeldenummer: 18715563.5
(22) Anmeldetag: 26.03.2018
(51) Int. Cl.: A01N 1/02, G01K 11/06

(54) **TIEFTEMPERATUR-INDIKATORMISCHUNG, VORRICHTUNG UND VERFAHREN ZUR ÜBERWACHUNG EINES TEMPERATURÜBERGANGS BEI TIEFEN TEMPERATUREN**
LOW TEMPERATURE INDICATOR MIXTURE, DEVICE AND METHOD FOR MONITORING A TEMPERATURE TRANSITION AT LOW TEMPERATURES
MÉLANGE INDICATEUR DE BASSES TEMPÉRATURES, DISPOSITIF ET PROCÉDÉ POUR LA SURVEILLANCE D'UNE TRANSITION THERMIQUE EN CAS DE BASSES TEMPÉRATURES

(30) Priorität: 31.03.2017 DE 102017003171
(43) Veröffentlichungstag der Anmeldung: 05.02.2020
(73) Patentinhaber: Fraunhofer-Gesellschaft zur Förderung der angewandten Forschung e.V., 80686 München (DE)
(72) Erfinder: FUHR, Günter R., 13187 Berlin (DE); ZIMMERMANN, Heiko, 97295 Waldbrunn (DE)
(74) Vertreter: v. Bezold & Partner Patentanwälte - PartG mbB
(86) Internationale Anmeldenummer: PCT/EP2018/057568
(87) Internationale Veröffentlichungsnummer: WO 2018/177968

(56) Entgegenhaltungen:
- EP-A1- 2 216 636
- US-A- 5 282 684
- US-A1- 2011 009 535

## Beschreibung

### HINTERGRUND DER ERFINDUNG

Die Erfindung betrifft eine Indikatormischung, welche zur Überwachung eines Temperaturübergangs bei tiefen Temperaturen, insbesondere in einem Bereich von -20 °C bis -160 °C, geeignet und bestimmt ist, sowie Vorrichtungen und Verfahren zur Temperaturüberwachung, bei denen eine solche Indikatormischung zum Einsatz kommt. Von besonderem Interesse ist dabei die Temperaturüberwachung einer kryokonservierten biologischen Probe.

Die Tieftemperaturkonservierung (Kryokonservierung) von Zellen ist bisher die einzige Möglichkeit, Lebensprozesse auf zellulärer Ebene reversibel (vitalitätserhaltend) so anzuhalten, dass sie nach einer Erwärmung auf physiologische Temperaturen wieder anlaufen können. Die Kryokonservierung hat sich über große Biobanken in den letzten Jahrzehnten zu einem unverzichtbaren Element für Kliniken, Pharmaunternehmen, die Arterhaltung, den Umweltschutz und die Gesundheitsvorsorge entwickelt. Gelagert wird biologisches Material in tieftemperaturverträglichen Probenbehältern (Kryobehältern), z. B. Röhrchen, Straws und Beuteln, unterschiedlicher Größe. Bei der Kryokonservierung sind die gelagerten Biomaterialien unter Aufrechterhaltung der Vitalität des Probenmaterials gefroren, zumeist bei Temperaturen unterhalb -80 °C, für Lebendsammlungen unter-140 °C bis zur Temperatur des flüssigen Stickstoffs. Für eine kryokonservierte Probe oder eine für die Kryokonservierung vorgesehene Probe wird nachfolgend auch der Begriff "Kryoprobe" verwendet.

Die Qualität der Proben ist von ausschlaggebender Bedeutung, da sie für Zelltherapien in Kliniken, die Entwicklung von Pharmaka und biotechnologischen Produkten, als nationale Ressourcen und vieles mehr Anwendung finden. Die Lagerzeit liegt bei einigen Tagen bis zu Jahrzehnten, mit einer Tendenz zur Langzeitlagerung. Die Proben werden in gekühlten Behältern gelagert, befinden sich zumeist in Metalleinschüben und Racks, mit denen sie bei neuen Einlagerungen oder Entnahmen Temperaturschwankungen unterliegen. Bei Lebendablagen (Zellen, Zellsuspensionen und Gewebeteilen) spielt nicht nur die ununterbrochene Kühlkette eine entscheidende Rolle, sondern auch die Vermeidung großer Temperatursprünge in der Tiefkühlphase. Da es bei der Entnahme gar nicht so selten vorkommt, dass Kryobehälter sich auf Temperaturen von -80 °C bis -20 °C erwärmen, treten, obwohl sie noch gefroren sind, Qualitätsminderungen unerkannt auf, die nicht nur den Wert der Probe mindern, sondern auch bei ihrer Verwendung im klinischen Bereich zu lebensgefährlichen Situationen führen können. Selbst kurzzeitig aufgetauten Proben sieht man im wiedergefrorenen Zustand nicht an, dass sie dem Originalzustand nicht mehr entsprechen. Es geht aber vornehmlich nicht nur darum, ein Auftauen der Biomaterialien zu erkennen, sondern das Überschreiten einer Grenztemperatur im Bereich zwischen -160 °C oder -140 °C und -20 °C zu dokumentieren.

Wie im folgenden Text noch näher erläutert, erfordert die Entwicklung und Bereitstellung einer geeigneten Tieftemperatur-Indikatormischung die Lösung spezieller Probleme, welche bei höheren Temperaturen nicht auftreten, sodass die bekannten Lösungen und Strategien zur Entwicklung von Indikatormischungen für gemäßigte Temperaturen nicht auf diesen Bereich übertragbar sind.

Beispielsweise offenbart das deutsche Patent DE 696 20217 T2 eine alkoholhaltige Zusammensetzung zur Verwendung in einer Temperaturanzeigevorrichtung, welche das Unterschreiten einer kritischen Temperatur und damit das Stattfinden einer unerwünschten Gefriervorgangs anzeigen soll. Die kritische Temperatur liegt dabei typischerweise im Bereich von ca. +5°C bis -5°C (vgl. z.B. Tabelle 1 dieser Druckschrift). Das dort beschriebene System ist für die Anwendung unter den hier relevanten Bedingungen und Temperaturen, bei denen die Probe typischerweise bereits weit unter der kritischen Temperatur unterkühlt vorliegt und das Schmelzen der gefrorenen Indikatormischung das Überschreiten einer kritischen Temperatur anzeigt, schon deshalb völlig ungeeignet, da bei diesem System die Anzeige bereits während des ersten Abkühlschritts irreversibel aktiviert würde.

EP 2 216 636 A1 offenbart eine Indikatormischung, welche typischerweise Wasser umfasst und die Überschreitung einer Temperatur um den 0°C-Bereich anzeigt. Bei Temperaturen zwischen -20°C und -160°C würde dieses System entweder überhaupt nicht funktionieren (bei Anwesenheit einer Wasserkomponente) oder sehr lange Ansprechzeiten erfordern.

Vorteilhafte Vorrichtungen und Verfahren zur Temperaturüberwachung einer kryokonservierten biologischen Probe werden beispielsweise in den Patentanmeldungen DE 10 2016 005 070.5, DE 10 2016 005 075.6, DE 10 2016 005 076.4, DE 10 2016 005 077.2, und DE 10 2016 005 133.7 beschrieben. In diesen Dokumenten wird auch die Verwendung einer Indikatorsubstanz, deren Schmelztemperatur in einem Bereich von -20 °C bis -140 °C liegt, offenbart und verschiedene geeignete Indikatorsubstanzen genannt.

Weitere eingehende Studien der Erfinder haben nun ergeben, dass zur Bereitstellung optimaler Indikatorsubstanzen die Berücksichtigung einer Reihe von Faktoren erforderlich ist, die bisher nicht oder kaum untersucht wurden.

Eine wichtige Voraussetzung für eine geeignete Indikatorsubstanz ist zunächst die Möglichkeit, die Temperatur einer nachweisbaren Zustandsänderung, typischerweise ein Phasenübergang wie Schmelzen oder Gefrieren, aber nicht darauf beschränkt, mit geringen Abweichungen reproduzierbar in einem bestimmten Bereich auszuwählen bzw. einzustellen. Diese Temperaturen sind jedoch oft nicht bekannt, bzw. ergeben sich nicht ohne weiteres aus theoretischen Überlegungen.

Beispielsweise zeigen viele Kohlenwasserstoffe, in geringerem Maße aber auch andere organische Flüssigkeiten, eine starke thermische Hysterese, das heißt, sie lassen sich unterkühlen und gefrieren in Ruhe bei sehr viel niedrigeren Temperaturen als der theoretischen Gefriertemperatur, zum Teil mit 20 °C bis 80 °C Differenz zu den Literaturangaben, und schmelzen andererseits nicht definiert bei der in den chemischen Tafelwerken angegebenen Schmelztemperatur sondern oft weit oberhalb derselben. So gefriert beispielsweise Polyethylenglycol in kleinen Volumina und unbewegt bei -60 °C, taut aber erst bei -20°C wieder auf. Somit können die tatsächlichen Gefrier- bzw. Schmelztemperaturen in kleinen Volumina und unbewegt nicht zuverlässig vorausgesagt werden, sondern müssen in Regel empirisch unter den konkreten Einsatzbedingungen bestimmt werden

Ein zweiter wichtiger Punkt ist, dass eine Indikatorsubstanz, welche eine Mischung von Komponenten darstellt, grundsätzlich die Möglichkeit bietet, den Schmelzpunkt bzw. Gefrierpunkt mit dem Mischungsverhältnis der Komponenten über einen breiteren Bereich hinweg recht genau einzustellen. Solche Mischungen führen jedoch zu komplexen Phasendiagrammen und die relevanten Phasenübergangstemperaturen müssen wiederum in der Regel empirisch bestimmt werden.

Ein weiteres Problem bei vielen Substanzen ist die hohe Viskosität bei Erreichung des Schmelzpunkts, welche den Nachweis des Phasenübergangs, je nach der verwendeten speziellen Nachweismethode, erschweren oder unmöglich machen kann.

Ebenfalls zu berücksichtigen ist die Tatsache, dass die Indikatorsubstanzen mit den am häufigsten als Behältermaterial verwendeten Kunststoffen kompatibel sein müssen, d. h., diese weder auflösen noch durchdringen können. Darüber hinaus sollten sie wegen eines eventuellen Kontakts mit den biomedizinischen Proben im Havariefall nicht-toxisch, langzeitlagerbar und kostengünstig erhältlich sein.

Falls die Indikatorsubstanz einen Farbstoff enthält, um beispielsweise die Position der Indikatorsubstanz vor und/oder nach der gewünschten Zustandsänderung leichter bestimmen zu können, muss dieser Farbstoff mit der zu färbenden Substanz kompatibel, insbesondere löslich, sein und auch bei den vorgesehenen tiefen Temperaturen ein hohes Färbevermögen besitzen.

Es ist somit eine Aufgabe der Erfindung, verbesserte Mittel zur Anzeige bzw. Überwachung eines Temperaturübergangs bei tiefen Temperaturen innerhalb eines Bereichs von -20 °C bis -160 °C bereitzustellen, welche den verschiedenen gestellten Anforderungen genügen und es ermöglichen, für vorgegebene zu überwachende Zieltemperaturen jeweils optimierte Indikatorsubstanzen bereitzustellen und so die Nachteile herkömmlicher Techniken zu vermeiden.

Diese Aufgaben werden erfindungsgemäß durch die Tieftemperatur-Indikatormischung sowie die Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung näher erläutert.

### BESCHREIBUNG DER ERFINDUNG

Als Ergebnis umfangreicher Untersuchungen und Tests vieler potentieller Indikatorsubstanzen wurde festgestellt, dass tatsächlich nur eine relativ kleine Gruppe von Verbindungen optimal zur Bereitstellung einer Indikatormischung für tiefe Temperaturen, insbesondere für den obengenannten Bereich von -20 °C bis -160 °C, geeignet ist.

Typischerweise enthält diese Indikatormischung auch einen Farbstoff.

Demgemäß betrifft ein erster Aspekt der Erfindung eine Tieftemperatur-Indikatormischung zur Anzeige/Überwachung eines Temperaturübergangs innerhalb eines Temperaturbereichs von -20 °C bis -160 °C, insbesondere -25 °C bis -160 °C oder -50 °C bis -150 °C, nach Anspruch 1, welche die folgenden Komponenten umfasst:
mindestens einen Farbstoff; und
mindestens einen Alkohol, ausgewählt aus der Gruppe, welche Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst; und
wobei die Schmelztemperatur der Mischung innerhalb eines Temperaturbereichs von -20 °C bis -160 °C, insbesondere -25 °C bis -160 °C oder -50 °C bis -150 °C, liegt.

Alle Angaben von Phasenübergangstemperaturen in diesem Text beziehen sich auf die Temperaturen bei Normaldruck (1013,25 hPa) .

Die folgende Tabelle 1 gibt die in chemischen Tabellenwerken aufgeführten Schmelzpunkte der besonders geeigneten Alkoholkomponenten an. Diese Literatur-Schmelzpunkte werden in Regel in größeren Volumina (ml-Bereich) und in bewegtem Zustand (Vibration) gemessen.

**Tab. 1**

| | |
|---|---|
| Octan-1-ol | Schmelzpunkt: -14,9 °C |
| Nonan-1-ol | Schmelzpunkt: -6 °C |
| Propan-1,2-diol | Schmelzpunkt: -68 °C |
| Propan-1,3-diol | Schmelzpunkt: -32 °C |
| Butan-1,2-diol | Schmelzpunkt: -114 °C |
| Butan-1,3-diol | Schmelzpunkt: <-50 °C |
| Butan-2-ol | Schmelzpunkt: -114,7 °C |
| Pentan-1,5-diol | Schmelzpunkt: -16 °C |
| Benzylalkohol | Schmelzpunkt: -15 °C |
| Pentan-1-ol | Schmelzpunkt: -78,2 °C |
| Cyclopentanol | Schmelzpunkt: -19 °C |

Im folgenden Text beziehen sich die Begriffe "Schmelzpunkt" bzw. "Schmelzpunkt der Indikatormischung", soweit nicht explizit als "Tabellenschmelztemperatur" bezeichnet, jeweils auf den tatsächlichen Schmelzpunkt unter den typischen Einsatzbedingungen, insbesondere in Volumina von weniger als 1 ml und in unbewegtem Zustand gemessen.

Als Farbstoff kommt grundsätzlich jeder Farbstoff in Frage, welcher mindestens die folgenden Bedingungen erfüllt:
- intensives Färbevermögen auch in kleinen Mengen und Konzentrationen (z. B. ausgehend von einer gesättigten Farblösung Zugabe im Bereich < 1 Volumen-%, in der Regel im Promille- oder Subpromille-Bereich).
- frosttolerant
- lichtecht bei den Versand- als auch den relevanten tiefen Temperaturen
- löslich in allen Bestandteilen der Indikatormischung
- kein Entmischen beim Einfrieren
- keine Reaktion mit Kunststoffmaterialien, welche in Kontakt mit der Indikatormischung kommen.

Vorzugsweise ist der Farbstoff aus der Gruppe ausgewählt, welche Triphenylmethanfarbstoffe, Rhodaminfarbstoffe, insbesondere Xanthene, Azofarbstoffe sowie Phenazin- und Phenothiazinfarbstoffe umfasst.

In spezielleren Ausführungsformen ist der Farbstoff aus der Gruppe ausgewählt, welche Oil Red, Methylrot, Brillantgrün, Rhodamin B, Neutralrot und Methylenblau umfasst.

Die Konzentration des Farbstoffs in der Alkoholkomponente kann je nach Farbstoff und Alkohol stark variieren.

In der Regel soll die Konzentration bei intensiver Färbung so niedrig wie möglich gehalten werden, damit die Farbmoleküle das Gefrier- und Schmelzverhalten der Alkohole, in denen sie gelöst werden, nicht verändern oder deren Viskosität erhöhen. Die Farbstoffkonzentration liegt dabei typischerweise in einem Bereich von < 10 Volumen-%, insbesondere < 1 % oder < 0,1 %, also im Prozent- oder Promille- bzw. Subpromillebereich.

Gemäß einer speziellen Ausführungsform der Erfindung wird jedoch gezielt eine ausreichend hohe Konzentration des Farbstoffs in der Alkoholkomponente verwendet, um den Schmelzpunkt der resultierenden Mischung so zu erhöhen, so dass er erheblich über dem Schmelzpunkt des reinen Alkohols liegt. Der Schmelzpunkt der Mischung kann beispielsweise um mindestens 10 °C, vorzugsweise mindestens 20 °C oder 30-70 °C, höher als der Schmelzpunkt der Mischung ohne Farbstoff liegen.

Die Farbstoffkonzentration kann dabei beispielsweise 10-100 %, 50-100 %, 70-100 %, 80-100 % oder 90-100 % der Sättigungskonzentration betragen. Auf diese Weise kann der Schmelzpunkt der Indikatormischung in einem bestimmten Temperaturbereich eingestellt werden. Beispielsweise hat eine gesättigte Lösung von Rhodamin B in Butan-2-ol einen Schmelzpunkt von ca. -60 °C (d.h. ca. 60 °C höher als der Schmelzpunkt des reinen Alkohols).

In besonders bevorzugten Ausführungsformen der erfindungsgemäßen Tieftemperatur-Indikatormischung ist der mindestens eine Alkohol Propan-1,3-diol, Propan-1,2-diol oder Butan-2-ol.

Eine Kombination von 1,3-Propandiol + Farbstoff eignet sich beispielsweise sehr gut als Indikatormischung für Gefriergut, das bei -30 °C bis - 80 °C gelagert wird (Schmelztemperatur TS = -25 °C).

Eine Kombination von 1,2-Propandiol + Farbstoff eignet sich beispielsweise sehr gut als Indikatormischung für Gefriergut, das bei -80 °C bis -196 °C gelagert wird (TS = -60 °C).

Eine Kombination von Butan-2-ol + Farbstoff eignet sich beispielsweise sehr gut als Indikatormischung für Gefriergut, das bei -140 °C bis -196 °C gelagert wird (TS = -116 °C).

Die TS-Werte dieser Beispiele wurden in 1 ml Lösung bei absoluter Ruhe im Labor bestimmt.

Wie bereits oben erwähnt, bietet eine Indikatorsubstanz, welche eine Mischung von Komponenten darstellt, grundsätzlich die Möglichkeit, den Schmelzpunkt bzw. Gefrierpunkt mit dem Mischungsverhältnis der Komponenten über einen breiten Bereich hinweg recht genau einzustellen.

In der Regel besser als über die Hochdosierung eines Farbstoffes lässt sich das über die Mischung zweier Alkohole mit deutlich unterschiedlicher Schmelztemperatur erreichen.

Demgemäß ist eine Ausführungsform der Erfindung dadurch gekennzeichnet, dass die Indikatormischung mindestens zwei verschiedene Alkoholkomponenten umfasst:
a) einen Alkohol, ausgewählt aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst;
b) einen Alkohol, ausgewählt aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, mit einem niedrigeren Schmelzpunkt als der Alkohol der Komponente a);
wobei das Mischungsverhältnis der Komponenten a) und b) so eingestellt ist, dass die Schmelztemperatur der Mischung innerhalb eines Temperaturbereichs von -20 °C bis -160 °C, insbesondere von -25 °C bis -160 °C oder -50 °C bis -150 °C, liegt.

Speziellere Ausführungsformen der Erfindung sind dadurch gekennzeichnet, dass die Tieftemperatur-Indikatormischung eine der folgenden Kombinationen der Komponenten a) und b) umfasst:
- Octan-1-ol und Butan-2-ol in einem Mischungsverhältnis von 5 bis 95 Vol.-%;
- Octan-1-ol und Pentan-1-ol in einem Mischungsverhältnis von 5 bis 95 Vol.-%;
- Octan-1-ol und Propan-1,2-diol in einem Mischungsverhältnis von 5 bis 95 Vol.-%;
- Nonan-l-ol und Butan-2-ol in einem Mischungsverhältnis von 5 bis 95 Vol.-%;
- Nonan-l-ol und Propan-1,2-diol in einem Mischungsverhältnis von 5 bis 95 Vol.-%;
- Nonan-l-ol und Pentan-1-ol in einem Mischungsverhältnis von 5 bis 95 Vol.-%;
- Propan-1,2-diol und Butan-2-ol in einem Mischungsverhältnis von 5 bis 95 Vol.-%;
- Propan-1,2-diol und Propan-1,3-diol in einem Mischungsverhältnis von 5 bis 95 Vol.-%;
- Propan-1,2-diol und Butan-1,2-diol in einem Mischungsverhältnis von 5 bis 95 Vol.-%;
- Propan-1,3-diol und Butan-2-ol in einem Mischungsverhältnis von 5 bis 95 Vol.-%;
- Propan-1,3-diol und Butan-1,2-diol in einem Mischungsverhältnis von 5 bis 95 Vol.-%;
- Pentan-1,5-diol und Butan-2-ol in einem Mischungsverhältnis von 5 bis 95 Vol.-%;
- Benzylalkohol und Butan-2-ol in einem Mischungsverhältnis von 5 bis 95 Vol.-%;
- Pentan-1-ol und Butan-2-ol in einem Mischungsverhältnis von 5 bis 95 Vol.-%;
- Pentan-1-ol und Methanol in einem Mischungsverhältnis von 5 bis 95 Vol.-%;
- Cyclopentanol und Butan-2-ol in einem Mischungsverhältnis von 5 bis 95 Vol.-%;
- Cyclopentanol und Propan-1,2-diol in einem Mischungsverhältnis von 5 bis 95 Vol.-%;
- Cyclopentanol und Pentan-1-ol in einem Mischungsverhältnis von 5 bis 95 Vol.-%;
- Cyclopentanol und Butan-1,2-diol in einem Mischungsverhältnis von 5 bis 95 Vol.-%;
wobei der angegebene Wert des Mischungsverhältnisses sich jeweils auf den Anteil der erstgenannten Komponente in der Mischung aus beiden Komponenten bezieht.

Eine noch speziellere Ausführungsform der Erfindung ist dadurch gekennzeichnet, dass bei dieser Tieftemperatur-Indikatormischung die Komponenten a) und b) aus Propan-1,3-diol, Propan-1,2-diol und Butan-2-ol ausgewählt sind und/oder der Farbstoff aus der Gruppe ausgewählt ist, welche Oil Red, Methylrot, Brillantgrün und Rhodamin B umfasst.

In besonders bevorzugten Ausführungsformen umfasst die erfindungsgemäße Tieftemperatur-Indikatormischung beispielsweise Propan-1,2-diol und Butan-2-ol in einem Mischungsverhältnis von 40 bis 60 Vol.-% (ergibt eine Schmelztemperatur von ca. - 90 °C), Propan-1,2-diol und Propan-1,3-diol in einem Mischungsverhältnis von 30 bis 70 Vol.-%, oder Propan-1,3-diol und Butan-2-ol in einem Mischungsverhältnis von 30 bis 70 Vol.-%.

Wie bereits oben erwähnt, weisen viele Substanzen bei Erreichung des Schmelzpunkts eine relativ hohe Viskosität auf, d.h. sie sind bei dieser Temperatur eher zähflüssig oder plastisch und nicht leicht beweglich oder transportabel.

Für Verfahren und Vorrichtungen zum Nachweis eines Temperaturübergangs wie hier im Folgenden beschrieben, welche u.a. darauf beruhen, dass eine zunächst immobile Indikatorsubstanz beim Überschreiten einer zu überwachenden Grenztemperatur "flüssig", d.h. mobil wird, ist daher häufig weniger die eigentliche Schmelztemperatur der Indikatorsubstanz relevant, sondern vielmehr diejenige Temperatur oberhalb der Schmelztemperatur, bei der die Viskosität der geschmolzenen Substanz soweit abgenommen hat, dass der erforderliche Flüssigkeitstransport stattfinden kann.

Diese Temperatur wird im Folgenden auch als Schwellentemperatur bezeichnet und liegt typischerweise in einem Temperaturbereich von 3-30 °C oder 5-30°C, beispielsweise 3-10 °C, 3-20 °C, 5-10 °C oder 5-20 °C, oberhalb der nominellen Schmelztemperatur.

In einer anderen bevorzugten Ausführungsform der Erfindung ist die Tieftemperatur-Indikatormischung daher dadurch gekennzeichnet, dass die flüssige Mischung in einem Temperaturbereich von 3-30 °C oder 5-30 °C oberhalb der Schmelztemperatur eine Viskosität in einem Bereich von 10 bis 10⁶ mPa*s, vorzugsweise 10 bis 10⁴ mPa*s oder 10 bis 10³ mPa*s, aufweist.

Ein zweiter, eng verwandter Aspekt der vorliegenden Erfindung betrifft die Verwendung der oben beschriebenen Tieftemperatur-Indikatormischung zur Anzeige bzw. Überwachung eines Temperaturübergangs innerhalb eines Temperaturbereichs von -20 °C bis -160 °C, insbesondere -25 °C bis -160 °C oder -50 °C bis -150 °C.

Diese Verwendung kann beispielsweise die Inkorporation der genannten Tieftemperatur-Indikatormischung in eine Vorrichtung zur Anzeige/Überwachung eines Temperaturübergangs innerhalb eines Temperaturbereichs von -20 °C bis -160 °C, insbesondere -25 °C bis -160 °C oder -50 °C bis -150 °C, beinhalten.

Demgemäß betrifft ein weiterer Aspekt der vorliegenden Erfindung solche Vorrichtungen zur Anzeige bzw. Überwachung eines Temperaturübergangs innerhalb eines Temperaturbereichs von -20 °C bis -160 °C, insbesondere -25 °C bis -160 °C oder -50 °C bis -150 °C, welche als eine Komponente die oben beschriebene Tieftemperatur-Indikatormischung umfassen.

Gemäß der vorliegenden Erfindung umfasst die Vorrichtung zur Anzeige bzw. Überwachung eines Temperaturübergangs bei den genannten tiefen Temperaturen mindestens die folgenden Komponenten in mindestens einem abgeschlossenen Raum:
a) einen ersten Teilbereich des Raums, welcher mindestens teilweise mit einer Indikatormischung wie oben beschrieben gefüllt ist;
b) einen zweiten Teilbereich, der für die Indikatormischung im flüssigen Zustand zugänglich ist und mindestens teilweise mit einem saugfähigen Material gefüllt ist, das gegebenenfalls durch ein Trennelement von der Indikatormischung getrennt ist;
c) gegebenenfalls Mittel zum Durchbrechen des Trennelements, um die Indikatormischung in flüssigem Zustand in Kontakt mit dem saugfähigen Material zu bringen.

Das saugfähige Material ist grundsätzlich nicht besonders beschränkt und kann beispielsweise aus der Gruppe ausgewählt sein, welche Cellulosematerialien, partikuläre anorganische Materialien wie Gips, Kreide, poröse Membranen, Gewebe und Gewirke, nano- und mikroporöse Aluminiumoxidschichten, umfasst.

Das optimale Material kann u.a. in Abhängigkeit von der Viskosität der flüssigen Indikatormischung bei einer bestimmten Grenz- oder Schwellentemperatur ausgewählt werden.

Umgekehrt kann die Indikatormischung so ausgewählt werden, dass deren Viskosität bei der Schmelztemperatur oder einer vorbestimmten Grenztemperatur, deren Überschreiten überwacht werden soll, in einem Bereich liegt, der eine gute Flüssigkeitsaufnahme bzw. einen guten Flüssigkeitstransport durch das saugfähige Material erlaubt.

Diese Viskosität liegt typischerweise in einem Bereich von 10 bis 10⁴ mPa*s, vorzugsweise 10 bis 10³ mPa*s.

Bei der Ausgangstemperatur, z.B. der Lagertemperatur eines Gefriergutes, insbesondere einer kryokonservierten biologischen Probe, befindet sich die Tieftemperatur-Indikatormischung in einem immobilen, typischerweise plastischen oder festen, Zustand und ausschließlich in einem ersten Teilbereich eines abgeschlossenen Raumes in dieser Vorrichtung.

Wird eine zu überwachende Grenztemperatur, die der Schmelztemperatur der Indikatormischung oder einer oberhalb der Schmelztemperatur liegenden Schwellentemperatur, bei welcher die Viskosität der flüssig gewordenen Indikatormischung genügend stark abgenommen hat, entspricht, überschritten, wird die Indikatormischung flüssig bzw. mobil und gelangt von dem ersten Teilbereich in den zweiten Teilbereich der Raumes. Befindet sich somit zumindest ein Teil der Indikatormischung zu einem späteren Kontrollzeitpunkt in dem zweiten Teilbereich, kann auf eine zwischenzeitlich erfolgte, zumindest kurzzeitige Überschreitung der Grenztemperatur geschlossen werden.

Optional weist der abgeschlossene Raum eine an den ersten Teilbereich angrenzende Barriere für die Indikatormischung auf. Diese Barriere kann sich insbesondere zwischen dem ersten Teilbereich und dem zweiten Teilbereich befinden oder in einem an den ersten Teilbereich angrenzenden Abschnitt des zweiten Teilbereichs.

Eine diesbezüglich einfache und direkte Ausführungsform der Erfindung sieht vor, dass die Barriere ein in Bezug auf die Indikatormischung im flüssigen Zustand permeables Trennelement ist, das zwischen dem ersten und zweiten Teilbereich angeordnet ist. Die Barriere bildet somit eine Trennschicht zwischen erstem und zweitem Teilbereich aus, die für die Indikatorsubstanz nur im flüssigen, nicht jedoch im gefrorenen Zustand durchlässig ist. Das in Bezug auf die Indikatormischung im flüssigen Zustand permeable Trennelement kann beispielsweise als poröse Trennwand, Membran, Folie, Haut oder Kapillarsystem ausgeführt sein.

Diese Barriere kann auch ein Trennelement sein, welches mindestens einen Teil der Wandung eines Behältnisses, das die flüssige Indikatormischung (im ersten Teilbereich) dicht umschließt, darstellt oder umfasst. Diese Barriere bzw. dieses Trennelement kann zu einem vorbestimmten Zeitpunkt durch mechanische Mittel oder chemische oder physikalische Stimuli, insbesondere Überschreiten oder Unterschreiten einer bestimmten Grenztemperatur, durchbrochen werden.

In einer vorteilhaften Ausführungsform ist dieses Trennelement dazu ausgelegt, bei Abkühlung der Vorrichtung auf eine Lagertemperatur, die unterhalb der Schmelztemperatur der Indikatormischung liegt, aufgrund der thermischen Kontraktion an mindestens einer Stelle zu reißen, so dass die Indikatormischung im flüssigen Aggregatszustand über die durch die mindestens eine Rissstelle gebildete Öffnung von dem ersten Teilbereich in den zweiten Teilbereich gelangen kann. Bei ordnungsgemäßer Lagerung ist die Indikatormischung gefroren und kann somit trotz der vorhandenen Öffnungen nicht in den zweiten Teilbereich gelangen.

Das Trennelement kann mindestens eine Sollbruchstelle aufweisen, an der das Trennelement bei der Abkühlung der Vorrichtung auf die Lagertemperatur reißt. Eine Sollbruchstelle in diesem Sinne ist eine vorgegebene Stelle des Trennelements, an dem dieses bei der Abkühlung auf Lagertemperatur reißt. Dies bietet den Vorteil, dass die Lage und Größe der Rissstelle vorbestimmt ist und somit auch die dadurch ermöglichte Durchflussrate der Indikatormischung, wenn diese flüssig ist.

Gemäß einer anderen vorteilhaften Variante wird ein Trennelement zu einem gewünschten Zeitpunkt auf mechanische Weise durchbrochen. Hierzu kann die Vorrichtung zur Temperaturüberwachung ein in Bezug auf das Behältnis beweglich geführtes Aktivierungsteil aufweisen, das von einer ersten Stellung, hier als Ausgangsstellung bezeichnet, in eine zweite Stellung, hier als Aktivierungsstellung bezeichnet, bringbar ist. Die Bewegung in die Aktivierungsstellung bewirkt, dass das Aktivierungsteil durch mechanischen Druck das Behältnis, genauer das Trennelement, an mindestens einer Stelle zerstört, insbesondere derart, dass das Behältnis durchlässig für die Indikatormischung im flüssigen Zustand wird. Es wird somit ein Mechanismus bereitgestellt, mit dem die Vorrichtung zur Temperaturüberwachung zu einem gewünschten Zeitpunkt aktiviert bzw. scharfgeschaltet werden kann.

Beide Varianten bietet den Vorteil, dass derartige als Indikatoreinrichtung dienende Vorrichtungen fertig montiert und befüllt beliebig lange bei Raumtemperatur gelagert werden können, da das Trennelement im Ausgangszustand nicht durchlässig ist.

Ein weiterer Vorteil einer an den ersten Teilbereich angrenzenden Barriere, die sich zwischen dem ersten Teilbereich und dem zweiten Teilbereich oder in einem an den ersten Teilbereich angrenzenden Abschnitt des zweiten Teilbereichs befindet, besteht darin, dass die Barriere so ausgelegt sein kann, dass die Indikatormischung beim Flüssigwerden nicht sofort vollständig in den zweiten Teilbereich des Raumes gelangt, sondern dies verzögert erfolgt und somit hierfür eine vorbestimmte Zeit in Anspruch nimmt. Daher kann aus der Menge an Indikatormischung, die sich zu einem bestimmten Zeitpunkt in dem zweiten Teilbereich befindet, ein Maß für die Zeitdauer einer zurückliegenden Überschreitung der Schmelztemperatur abgeleitet werden.

Die Verzögerung des Flüssigkeitstransports kann beispielsweise dadurch erreicht werden, dass die Barriere ein in dem zweiten Teilbereich angeordnetes und an den ersten Teilbereich angrenzendes Material mit flüssigkeitsaufnehmender Struktur, d.h. saugfähiges Material, umfasst. Das Material kann ein poröses Material oder Medium sein. Das Material, z. B. eine Saugmasse, kann beispielsweise Filterpapier, z. B. wie das einer herkömmlichen Küchenrolle oder eines Zigarettenfilterpapiers, ein Presskörper, Cellulosescheiben, z.B. Taschentuchcellulosescheiben, Gips und/oder Kreidestaub, aber auch eine Schicht nano- oder mikroporösen Materials sein. Dieses kann in den Eigenschaften so beeinflusst werden, z. B. durch Variation der porösen Struktur, dass es die Aufnahme der Flüssigkeit durch Kapillarkräfte befördert. Es kann jedoch auch ein anderweitig zur Flüssigkeitsaufnahme geeignetes bzw. saugfähiges Material sein.

Gemäß einer ersten solchen Ausführungsform befindet sich die Indikatormischung anfangs im erstarrten Zustand neben der Barriere in Form des saugfähigen Materials oder liegt der Barriere auf, kann jedoch nicht in diese eindringen. Im flüssigen Aggregatszustand und somit nach Überschreiten der Schmelztemperatur bzw. auch der oben definierten Schwellentemperatur der Indikatormischung diffundiert die im ersten Teilbereich befindliche Indikatormischung langsam in das an den ersten Teilbereich angrenzende Material mit flüssigkeitsaufnehmender Struktur hinein oder werden über Kapillarkräfte aufgenommen. Dadurch wird das Material von der Indikatormischung penetriert. Die Indikatormischung gelangt auf diese Weise verzögert in den zweiten Teilbereich. Wie stark die Verzögerung ist, hängt von der Diffusionsgeschwindigkeit ab.

Ein weiterer Vorteil ist, dass die Lage der Diffusionsfront ein Maß für die Zeit ist, die die Indikatorsubstanz und damit auch die Probe im Aufnahmeraum dem unerlaubten Temperaturbereich ausgesetzt war. Dies kann durch Feststellen der Lage der Diffusionsfront festgestellt werden. Zwar ist die Diffusionsgeschwindigkeit auch eine Funktion der Viskosität, die selbst temperaturabhängig ist; es genügt aber oft, eine Abschätzung zwischen wenigen Minuten und einigen Stunden bis zu Tagen vorzunehmen.

Somit ist es möglich, sowohl die Überschreitung einer Grenztemperatur als auch die Zeitdauer der Überschreitung zu erfassen.

Ferner ist eine Kombination mehrerer Indikatormischungen mit verschiedenen Schmelztemperaturen (optional z.B. in verschiedenen abgeschlossenen Räumen) und mehreren Diffusionsstrecken, die sich vereinigen oder verzweigen, möglich, um so genauere Zeitangaben in Bezug auf die Dauer der Temperaturüberschreitung ermitteln zu können.

Die Anzeigetemperatur eines erfindungsgemäßen Systems (z.B. einer Vorrichtung zur Anzeige/Überwachung eines Temperaturübergangs wie oben und nachfolgend beschrieben), das eine Barriere, gegebenenfalls einschließlich eines saugfähiges Materials, umfasst, ergibt sich wie folgt: Es ist nicht die Schmelztemperatur der Indikatormischung, die sich aus Messungen in Volumina von einigen ml und mehr ergibt oder sich in Lehr- und Tabellenbüchern findet, sondern die Temperatur, bei der ein Volumen der Mischlösung von weniger als 1 ml, insbesondere < 100 µl oder auch < 30 µl, fluide wird und die Viskosität, Benetzbarkeit und andere chemische Eigenschaften einen Wert erreichen, bei dem die Indikatormischung:
1. Das Saugmedium benetzt und in dieses eindringt und/oder durch die Barriere diffundiert.
2. Eine erkennbare oder messbare Färbung von außen an dem System erkennbar ist.

Der Idealfall, dass dies beim Tabellenwert der Schmelztemperatur der Fall ist, wird mit zunehmend niedriger werdender Temperatur in immer geringerem Maße auftreten. Vielmehr verflüssigt sich die Indikatormischung im ruhigen System und in kleinen Volumina oberhalb der in den Datenblättern angegebenen oder in größeren Volumina bestimmten Schmelztemperatur. Bei den genannten tiefen Temperaturen von -20 °C bis -160 °C, insbesondere -25 °C bis -160 °C oder -50 °C bis -150 °C, ist auch bei der tatsächlichen Schmelztemperatur die Viskosität häufig noch zu hoch (> 10⁴ mPa*s), als dass die Indikatormischung in das Saugmedium oder durch die permeable Barriere gelangen könnte. Erst wenn das erfolgt und die Indikatormischung sichtbar oder messbar in das vorher nicht okkupierte Volumen eindringt, hat das System seine Anzeigetemperatur erreicht. In der Regel liegt die Anzeigetemperatur des Systems daher wenige °C, z.B. 3 oder 5 °C, bis zu 30° C und mehr oberhalb der tatsächlichen Schmelztemperatur und bis zu 50 °C und mehr oberhalb der Tabellenschmelztemperatur (soweit bekannt) der Indikatormischung.

In einer besonders bevorzugten Ausführungsform umfasst die Barriere sowohl ein Trennelement als auch ein saugfähiges Material wie oben beschrieben.

Bei einer ersten vorteilhaften Variante dieser Ausführungsform weist eine an den ersten Teilbereich angrenzende Oberfläche des saugfähigen Materials als Trennelement eine Abdeckung auf. Die Abdeckung ist ausgelegt, bei Abkühlung der Vorrichtung auf eine Lagertemperatur, die unterhalb der Schmelztemperatur der Indikatormischung liegt, von einem ersten Zustand der Abdeckung, in dem diese gegenüber der Indikatormischung impermeabel ist, irreversibel in einen zweiten Zustand der Abdeckung, in dem diese für die Indikatormischung permeabel ist, überzugehen. Im ersten Zustand ist die Abdeckung für die Indikatormischung auch im flüssigen Aggregatszustand impermeabel, d. h. nicht durchlässig. Die Abdeckung bildet somit eine Trennschicht aus. Die Abdeckung kann beispielsweise eine entsprechend ausgelegte Membran, eine Abdeckschicht, eine Haut oder eine Folie oder Ähnliches sein, die erst durch das Schrumpfen bei Abkühlung auf die Lagertemperatur reißt oder anderweitig für Flüssigkeiten durchlässig wird, so dass die Indikatormischung im flüssigen Aggregatszustand über die durch die mindestens eine Rissstelle oder allgemein Durchlassstelle gebildete Öffnung von dem ersten Teilbereich in den zweiten Teilbereich gelangen kann.

Vorzugsweise wird für diese Abdeckung ein Material verwendet, das stärker bei Abnahme der Temperatur schrumpft als das Material, welches den abgeschlossenen Raum bildet, und dadurch Öffnungen bildet, durch die die flüssige Indikatormischung in das saugfähige Material oder Material mit flüssigkeitsaufnehmender Struktur eindringen kann. Bei ordnungsgemäßer Lagerung ist die Indikatormischung gefroren und kann somit trotz der vorhandenen Öffnungen nicht in das Material oder in den zweiten Teilbereich des Raumes gelangen.

Bei einer zweiten vorteilhaften Variante wird ein Trennelement, welches mindestens einen Teil der Wandung eines Behältnisses, das die Indikatormischung im ersten Teilbereich umschließt und flüssigkeitsundurchlässig ist, darstellt oder umfasst, zu einem gewünschten Zeitpunkt auf mechanische Weise durchbrochen. Hierzu kann die Vorrichtung zur Temperaturüberwachung ein in Bezug auf das Trennelement beweglich geführtes Aktivierungsteil aufweisen, das von einer ersten Stellung, hier als Ausgangsstellung bezeichnet, in eine zweite Stellung, hier als Aktivierungsstellung bezeichnet, bringbar ist. Die Bewegung in die Aktivierungsstellung bewirkt, dass das Aktivierungsteil durch mechanischen Druck das Trennelement an mindestens einer Stelle zerstört, insbesondere derart, dass es durchlässig für die Indikatormischung im flüssigen Zustand wird. Es wird somit ein Mechanismus bereitgestellt, mit dem die Vorrichtung zur Temperaturüberwachung zu einem gewünschten Zeitpunkt aktiviert bzw. scharfgeschaltet werden kann.

Beide Varianten bietet wiederum den Vorteil, dass derartige als Indikatoreinrichtung dienende Vorrichtungen fertig montiert und befüllt beliebig lange bei Raumtemperatur gelagert werden können, da das Trennelement im Ausgangszustand nicht durchlässig ist.

Das oben beschriebene Behältnis für die Indikatormischung kann beispielsweise als Plastikkissen ausgeführt sein, was besonders kostengünstig herstellbar ist. Das Behältnis kann auch als Glaskugel ausgeführt sein, was beim Zerstören ein hörbares Knack-Geräusch und damit ein akustisches Feedback der Aktivierung erzeugt.

Solche Vorrichtungen zur Anzeige bzw. Überwachung eines Temperaturübergangs können beispielsweise einen Teil des (vorzugsweise transparenten) Deckels oder Bodens oder der Wandung eines Behälters für Gefriergut, insbesondere für eine kryokonservierte biologische Probe, bilden oder diesen darstellen.

Ein weiterer verwandter Aspekt der vorliegenden Erfindung betrifft ein Verfahren zur Anzeige/Überwachung eines Temperaturübergangs innerhalb eines Temperaturbereichs von -20 °C bis -160 °C, insbesondere -25° bis -160 °C oder -50 °C bis -150 °C, bei dem die oben beschriebene Tieftemperatur-Indikatormischung bzw. die oben beschriebenen Vorrichtungen zur Temperaturüberwachung zur Anwendung kommen.

Die obigen Ausführungen betreffend die Tieftemperatur-Indikatormischung bzw. die diese enthaltenden Vorrichtungen, insbesondere deren vorteilhafte Ausführungsvarianten, sollen somit zur Vermeidung von Wiederholungen auch als verfahrensgemäß offenbart gelten und beanspruchbar sein.

In einer Ausführungsform umfasst das erfindungsgemäße Verfahren zur Anzeige/- Überwachung eines Temperaturübergangs innerhalb eines Temperaturbereichs von-20 °C bis -160 °C mindestens die folgenden Schritte:
a) Bereitstellen einer Indikatormischung wie oben beschrieben in einem ersten Teilbereich eines abgeschlossenen Raums, der einen ersten Teilbereich und einen zweiten Teilbereich umfasst, wobei der abgeschlossene Raum gegebenenfalls noch eine an den ersten Teilbereich angrenzende Barriere für die Indikatormischung aufweist, die sich insbesondere zwischen dem ersten Teilbereich und dem zweiten Teilbereich oder in einem an den ersten Teilbereich angrenzenden Abschnitt des zweiten Teilbereichs befinden kann;
b) gekühltes Lagern der Indikatormischung bei einer gewünschten Temperatur innerhalb des obigen Temperaturbereichs, bei der die Indikatormischung gefroren ist;
c) gegebenenfalls Veranlassen des Durchbrechens einer an den ersten Teilbereich angrenzenden Barriere, die sich zwischen dem ersten Teilbereich und dem zweiten Teilbereich oder in einem an den ersten Teilbereich angrenzenden Abschnitt des zweiten Teilbereichs befindet, nach dem Gefrieren der Indikatormischung;
d) Prüfen, ob sich mindestens ein Teil der Indikatormischung in dem zweiten Teilbereich befindet, was eine mindestens zeitweilige Erhöhung der Temperatur auf mindestens die Schmelztemperatur bzw. mindestens die Schwellentemperatur der Indikatormischung anzeigt.

In einer spezielleren Ausführungsform umfasst das erfindungsgemäße Verfahren zur Anzeige/Überwachung eines Temperaturübergangs innerhalb eines Temperaturbereichs von -20 °C bis -160 °C, insbesondere -25 °C oder -50 °C bis -150 °C, mindestens die folgenden Schritte:
a) Bereitstellen einer Vorrichtung wie oben beschrieben, insbesondere nach einem der Ansprüche 13-14, die ein saugfähiges Material wie oben bezüglich der Vorrichtung beschrieben umfasst;
b) gekühltes Lagern der Vorrichtung bei einer gewünschten Temperatur innerhalb des obigen Temperaturbereichs, bei der die Indikatormischung gefroren ist;
c) Veranlassen des Durchbrechens eines Trennelements zwischen der Indikatormischung und dem saugfähigen Material nach dem Gefrieren der Indikatormischung;
d) Prüfen, ob mindestens ein Teil der Indikatormischung von dem saugfähigen Material aufgenommen wurde, was eine mindestens zeitweilige Erhöhung der Temperatur auf mindestens die Schmelztemperatur bzw. mindestens die Schwellentemperatur der Indikatormischung anzeigt.

In einer bevorzugten Ausführungsform des erfindungsgemäßen Verfahrens wird die Indikatormischung so ausgewählt, dass deren Schmelztemperatur oder die Temperatur, bei der die Viskosität der geschmolzenen Indikatormischung einen bestimmten Zielwert unterschreitet, einer vorbestimmten Grenztemperatur, deren Überschreiten überwacht werden soll, entspricht.

Das erfindungsgemäße Verfahren kann insbesondere zur Temperaturüberwachung von Gefriergut, vorzugsweise einer kryokonservierten biologischen Probe, eingesetzt werden.

Gemäß diesem Verfahren kann somit eine Vorrichtung zur Temperaturüberwachung, wie in diesem Dokument beschrieben, bereitgestellt werden, wobei die Vorrichtung mindestens eine Indikatormischung im gefrorenen Zustand im ersten Teilbereich eines abgeschlossenen Raumes enthält. Das Verfahren umfasst ferner das gekühlte Lagern des Kryobehälters mitsamt der Vorrichtung zur Temperaturüberwachung, sowie das Prüfen, ob sich zu einem späteren Zeitpunkt im zweiten Teilbereich des abgeschlossenen Raumes der Vorrichtung zur Temperaturüberwachung Indikatormischung befindet.

Ist dies der Fall, kann auf ein Überschreiten der Schmelztemperatur bzw. Schwellentemperatur der Indikatormischung und somit der zu überwachenden Grenztemperatur geschlossenen werden, insbesondere auch dann, wenn die Überschreitung nur kurzzeitig aufgetreten ist.

Ein besonderer Vorzug der Erfindung liegt somit darin, dass das Vorhandensein von Indikatormischung im zweiten Teilbereich direkt anzeigt, dass eine Kryoprobe sich über eine definierbare Grenztemperatur, und wenn auch nur kurzzeitig, erwärmt hat. Dies kann durch visuelle Sichtprüfung oder auch technisch automatisiert mittels einer entsprechend eingerichteten Messeinrichtung schnell und einfach festgestellt werden, ohne dass die Probe aus dem Probenbehälter entnommen oder aufgetaut werden muss.

Gemäß einer vorteilhaften Weiterbildung des Verfahrens kann ferner eine Kenngröße bestimmt werden, die ein Maß der in den zweiten Teilbereich übergegangenen Menge an Indikatormischung und/oder ein Maß der im ersten Teilbereich befindlichen Menge an Indikatormischung angibt. Eine derartige Kenngröße gibt ein Maß für die Dauer an, die die Probe oberhalb der Grenztemperatur verbracht hat.

Eine Kenngröße ist beispielsweise eine Größe, die die Menge an Indikatormischung im ersten oder im zweiten Teilbereich angibt. Die Kenngröße kann der Füllstand der Indikatormischung im zweiten Teilbereich sein oder die Länge der Diffusionsstrecke, die die Indikatormischung im saugfähigen Material mit der flüssigkeitsaufnehmenden Struktur erreicht hat.

Gemäß einer besonders bevorzugten Ausführungsform des Verfahrens wird zur Durchführung des Verfahrens eine Vorrichtung zur Temperaturüberwachung verwendet, die entweder ein Trennelement oder eine Abdeckung aufweist, die erst beim Abkühlen durchlässig für die Indikatormischung im flüssigen Aggregatszustand werden. Vorstehend wurde bereits beschrieben, dass zwischen dem ersten und zweiten Teilbereich ein Trennelement angeordnet sein kann, das ausgelegt ist, bei Abkühlung der Vorrichtung auf eine Lagertemperatur, die unterhalb der Schmelztemperatur der Indikatormischung liegt, aufgrund der thermischen Kontraktion an mindestens einer Stelle zu reißen, so dass die Indikatormischung im flüssigen Aggregatszustand über die durch die mindestens eine Rissstelle gebildete Öffnung von dem ersten Teilbereich in den zweiten Teilbereich gelangen kann.

Ebenfalls wurde beschrieben, dass eine an den ersten Teilbereich angrenzende Oberfläche des saugfähigen Materials als Trennelement eine Abdeckung, z. B. eine Membran oder Abdeckschicht, aufweisen kann, die ausgelegt ist, bei Abkühlung der Vorrichtung auf eine Lagertemperatur, die unterhalb der Schmelztemperatur der Indikatorsubstanz liegt, von einem ersten Zustand der Abdeckung, in dem diese gegenüber der Indikatorsubstanz impermeabel ist, irreversibel in einen zweiten Zustand der Abdeckung, in dem diese für die Indikatorsubstanz permeabel ist, überzugehen.

Gemäß einer anderen besonders bevorzugten Ausführungsform des Verfahrens wird zur Durchführung des Verfahrens eine Vorrichtung zur Temperaturüberwachung verwendet, die entweder ein Trennelement oder eine Abdeckung aufweist, das bzw. die auf die oben beschriebene Weise mechanisch durchbrochen werden kann, um der flüssigen Indikatormischung den Zugang zu dem zweiten Teilbereich des abgeschlossenen Raumes zu ermöglichen.

Die zuvor beschriebenen bevorzugten Ausführungsformen und Merkmale der Erfindung sind miteinander kombinierbar.

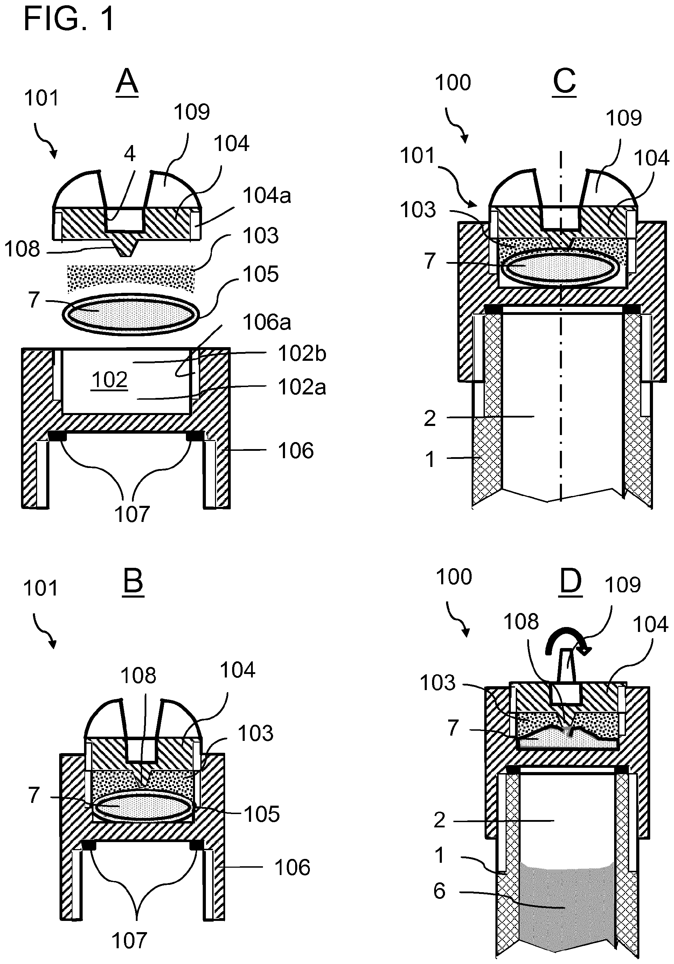

Ein nicht-beschränkendes, illustratives Beispiel für eine erfindungsgemäße Vorrichtung zur Anzeige bzw. Überwachung eines Temperaturübergangs ist in Fig. 1 dargestellt.

Figur 1 illustriert in mehreren Querschnittsansichten ein Ausführungsbeispiel 100 einer Vorrichtung zur Temperaturüberwachung. Die Ansicht A zeigt dabei eine Explosionsdarstellung eines Deckels 101 eines Kryoröhrchens 1, in dem eine Einrichtung zur Temperaturüberwachung integriert ist. Die Vorrichtung 100 umfasst das Kryoröhrchen 1 mit einem Aufnahmeraum 2 zur Aufnahme einer biologischen Probe 6 sowie den Deckel 101, der eine Kammer 102 aufweist, die eine Indikatormischung 7 enthält, die durch ein Trennelement im nicht scharfgeschalteten Zustand von einem Saugmaterial 103 getrennt ist. Der Deckel 101 wird nachfolgend auch als Temperatur-sensitiver (T-sensitiver) Deckel bezeichnet. Die Ansicht B zeigt den Deckel 101 im montierten Zustand, die Ansicht C illustriert ein verkaufsfertiges Kryoröhrchen 1 mit einem Aufnahmeraum 2 zur Aufnahme einer biologischen Probe 6 und mit dem aufgeschraubten T-sensitiven Deckel 101. Die Ansichten A bis C zeigen die Vorrichtung 100 im noch nicht scharfgeschalteten Zustand.

Der T-sensitive Deckel 101 umfasst vier Teile: einen Schraubeinsatz 104, nachfolgend als Einschraubteil 104 bezeichnet, einen Einsatz mit flüssigkeitsaufnehmender Struktur 103, nachfolgend als Saugmaterial 103 bezeichnet, der in der Lage sein muss, flüssige Indikatormischung 7 aufzusaugen, einen Behälter 105 für die Indikatormischung 7, hier beispielhaft ausgeführt als Plastikkissen 105, der gefärbte Flüssigkeit als Indikatormischung 7 enthält, wenn diese nicht gefroren ist, und einen Grundkörper 106 zum Aufschrauben auf ein handelsübliches Kryoröhrchen 1, hier ausgeführt als Plastikkappe 106.

Das Plastikkissen 105 bildet im nicht scharfgeschalteten Zustand der Vorrichtung 100 eine dichte Hülle für die darin befindliche Indikatormischung 7 aus; diese Hülle bildet eine Barriere, die im nicht scharfgeschalteten Zustand verhindert, dass die Indikatormischung 7 in Kontakt mit dem Saugmaterial 103 kommen kann. Die Ausführung als Plastikkissen bietet den Vorteil, dass dieses sehr kostengünstig herstellbar ist.

Das Einschraubteil 104 ist an zumindest einer Stelle transparent oder semi-transparent ausgeführt, so dass von oben durch das Einschraubteil 104 zumindest ein Teil des Saugmaterials 103 sichtbar ist. Das Einschraubteil 104 kann beispielsweise hierzu aus einem transparenten oder semitransparenten Material hergestellt sein. Ferner kann der Grundkörper 106 hierzu aus einem transparenten oder semitransparenten Material hergestellt sein. Auf diese Weise kann durch einfache Sichtprüfung von oben kontrolliert werden, ob sich der Farbzustand des Saugmaterials 103 geändert hat. Dies ist z. B. der Fall, wenn die gefärbte Indikatormischung 7 in das Saugmaterial 103 einpenetriert ist und dieses dadurch verfärbt, was nachfolgend noch beschrieben wird.

Der Grundkörper bzw. die Plastikkappe 106 hat einen H-förmigen Querschnitt, wodurch zwei zylinderförmige Hohlräume ausgebildet werden. Der obere Hohlraum 102 bildet eine Kammer mit einem ersten Teilbereich 102a, in dem sich der Behälter 105 mit Indikatorsubstanz 7 befindet, und mit einem zweiten Teilbereich 102b, in dem sich das Saugmaterial 103 befindet.

Der untere Hohlraum dient zur Aufnahme eines oberen Endabschnitts des Kryoröhrchens 1, um dieses dicht zu verschließen. Abgedichtet wird das Kryoröhrchen 1 mit einem Dichtungsring 107. Im Einschraubteil 103 befindet sich ein Eingriff 4, z. B. ein 6-Kantloch, über das das Einschraubteil 104 in den Grundkörper 106 eingedreht werden kann. Das Einschraubteil 104 kann auch Flügelblätter 109 aufweisen, über die das Einschraubteil 104 ebenfalls eingedreht werden kann. Zum Einschrauben ist am Einschraubteil 104 ein Außengewinde 104a vorgesehen, das in ein korrespondierendes Innengewinde 106a des Grundkörpers 106 eingreift, das an einer seitlichen Wandung des oberen Hohlraums 102 vorgesehen ist.

Wie bereits erwähnt, zeigen die Ansichten A bis C die Vorrichtung 100 im noch nicht scharfgeschalteten Zustand. Dies bedeutet, dass das mit gefärbter Indikatormischung gefüllte Plastikkissen 105 unzerstört und dicht ist, so dass Indikatormischung 7 im flüssigen Zustand nicht austreten kann. Im Innern des Plastikkissens 105 befindet sich die Indikatormischung 7 zunächst in flüssiger Form. Das darüber befindliche Saugmaterial 103 steht aufgrund des intakten Plastikkissens 105 nicht in Kontakt mit der Indikatormischung 7.

Das Einschraubteil 104 ist zunächst halb eingeschraubt (nicht scharfgeschalteter Zustand). Um sie weiter einzudrehen, z. B. eine viertel oder halbe Drehung, muss eine Plastiksperre im Gewinde 103a, 106a durchbrochen werden. Damit ist sichergestellt, dass die Einrichtung zur Temperaturüberwachung und/oder der T-sensitive Deckel nicht vor der Nutzung aktiviert werden. Sollte dies dennoch vor der Kryolagerung der Vorrichtung 100 bzw. der Probe 6 passieren, wird das in dem Grundkörper 106 befindliche Saugmaterial 103 gefärbt und darf folglich nicht eingesetzt werden. Der Transport und die Zwischenlagerung des Deckels 101 im nicht scharfgeschalteten Zustand können über beliebige Zeit erfolgen, was den Handel und die Vorratshaltung befördert.

Die Ansicht D der Figur 10 zeigt die Aktivierung (Scharfschaltung) der Vorrichtung nach Erreichen der Lagertemperatur, vorliegend z. B. < -140°C.

Die Indikatormischung 7 ist so gewählt, dass sie bei der Lagertemperatur in dem Behälter 105 nicht mehr flüssig, sondern bereits erstarrt ist. Die Aktivierung (Scharfschaltung) der Vorrichtung erfolgt durch Einschrauben des Einschraubteils 104 bei gefrorener Indikatormischung 7. Das Einschraubteil 104 weist an seiner unteren, dem Saugmaterial 103 zugewandten Seite einen abragenden Vorsprung 108 auf, z. B. in Form einer Spitze oder eines Dorns. Durch das Einschrauben des Einschraubteils 104 wird der Vorsprung 108 in das Plastikkissen 105 gebohrt und zerstört dieses. Dadurch kommt das Saugmaterial 103 in direkten Kontakt mit der gefärbten Indikatormischung 7. Diese ist bei der Lagertemperatur so zäh oder auch fest, dass sie nicht in das Saugmaterial 103 gezogen wird. Auch die noch immer ablaufenden thermischen Stöße reichen nicht für eine Diffusion aus.

Die Vorrichtung zur Temperaturüberwachung ist nun aktiviert (scharf). Sobald eine Schwellenwerttemperatur während der Kryolagerung, die den Schmelzpunkt des Gemisches der Indikatormischung 7 angibt, überschritten wird, wird die gefrorene Indikatormischung 7 flüssig. Mit steigender Temperatur nimmt die Viskosität ab, bis eine Schwelle überschritten wird, ab der das Saugmaterial 103 über Kapillarkräfte die Flüssigkeit einzieht und damit deren Farbe annimmt. Dieser Prozess ist irreversibel, d. h., selbst nach einem nachfolgenden erneuten Gefrieren der Indikatormischung 7 bleibt die Verfärbung des Saugmaterials 103 erhalten. Wird somit nachträglich bei einer Sichtkontrolle festgestellt, dass das Saugmaterial 103 eine Verfärbung aufweist, kann gefolgert werden, dass die Schmelztemperatur der Indikatormischung und ferner eine etwas höhere Temperatur als die der Schmelztemperatur ebenfalls überschritten wurden, bei der die Indikatormischung 7 so viskos geworden ist, dass sie über Kapillarkräfte in das Saugmaterial 103 gezogen wurde. Die Art und Dicke des Saugmaterials 103 bestimmt, wie schnell die erkennbare Färbung auftritt.

Was für das Saugmaterial 103 und die Indikatormischung 7 im Innern des Grundkörpers 106 gilt, trifft auch für die Temperatur in der Bioprobe 6 zu. Ein (z.B. rot) verfärbtes Saugmaterial zeigt somit an, dass auch die Bioprobe 6 die vorgenannten Temperaturen zumindest temporär überschritten hat. Da dieser Prozess auch bei erneutem Tiefkühlen nicht wieder aufgehoben werden kann, bewahrt die Vorrichtung 1 somit die Information der unerlaubten Erwärmung.

## Patentansprüche

1. Tieftemperatur-Indikatormischung zur Anzeige/Überwachung eines Temperaturübergangs innerhalb eines Temperaturbereichs von -20 °C bis -160 °C, insbesondere von -25 °C bis -160 °C oder -50 °C bis -150 °C, welche umfasst:
mindestens einen Farbstoff; und
mindestens einen Alkohol, ausgewählt aus der Gruppe, welche Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst; und
wobei die Schmelztemperatur der Mischung innerhalb eines Temperaturbereichs von - 20 °C bis -160 °C, insbesondere -25 °C bis -160 °C oder -50 °C bis -150 °C, liegt.

2. Tieftemperatur-Indikatormischung nach Anspruch 1, **dadurch gekennzeichnet, dass** der Farbstoff aus der Gruppe ausgewählt ist, welche Triphenylmethanfarbstoffe, Rhodaminfarbstoffe, insbesondere Xanthene, Azofarbstoffe sowie Phenazin- und Phenothiazinfarbstoffe umfasst.

3. Tieftemperatur-Indikatormischung nach Anspruch 1 oder 2, **dadurch gekennzeichnet, dass** der Farbstoff aus der Gruppe ausgewählt ist, welche Oil Red, Methylrot, Brillantgrün und Rhodamin B, Neutralrot und Methylenblau umfasst, und/oder der Alkohol Propan-1,3-diol, Propan-1,2-diol oder Butan-2-ol ist.

4. Tieftemperatur-Indikatormischung nach einem der Ansprüche 1-3, **dadurch gekennzeichnet, dass** die Konzentration des Farbstoffs in der Alkoholkomponente < 10 %, insbesondere < 1 % oder < 0,1 %, der Sättigungskonzentration beträgt.

5. Tieftemperatur-Indikatormischung nach einem der Ansprüche 1-3, **dadurch gekennzeichnet, dass** sie eine Lösung des Farbstoffs, insbesondere von Rhodamin B, in einer Konzentration im Bereich von 10-100 %, insbesondere 50-100 % oder 70-100 % der Sättigungskonzentration in der Alkoholkomponente, vorzugsweise in Butan-2-ol, insbesondere eine gesättigte Lösung von Rhodamin B in Butan-2-ol, umfasst oder darstellt.

6. Tieftemperatur-Indikatormischung nach einem der Ansprüche 1 bis 5, **dadurch gekennzeichnet, dass** sie mindestens zwei verschiedene Alkoholkomponenten umfasst:
a) einen Alkohol, ausgewählt aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst;
b) einen Alkohol, ausgewählt aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, mit einem niedrigeren Schmelzpunkt als der Alkohol der Komponente a);
wobei das Mischungsverhältnis der Komponenten a) und b) so eingestellt ist, dass die Schmelztemperatur der Mischung innerhalb eines Temperaturbereichs von -20 °C bis -160 °C, insbesondere von -25 °C bis -160 °C oder -50 °C bis -150 °C, liegt.

7. Tieftemperatur-Indikatormischung nach Anspruch 6, **dadurch gekennzeichnet, dass** sie eine der folgenden Kombinationen der Komponenten a) und b) umfasst:
- Octan-1-ol und Butan-2-ol in einem Mischungsverhältnis von 5 bis 95 Vol.-%;
- Octan-1-ol und Pentan-1-ol in einem Mischungsverhältnis von 5 bis 95 Vol.-%;
- Octan-1-ol und Propan-1,2-diol in einem Mischungsverhältnis von 5 bis 95 Vol.-%;
- Nonan-l-ol und Butan-2-ol in einem Mischungsverhältnis von 5 bis 95 Vol.-%;
- Nonan-l-ol und Propan-1,2-diol in einem Mischungsverhältnis von 5 bis 95 Vol.-%;
- Nonan-l-ol und Pentan-1-ol in einem Mischungsverhältnis von 5 bis 95 Vol.-%;
- Propan-1,2-diol und Butan-2-ol in einem Mischungsverhältnis von 5 bis 95 Vol.-%;
- Propan-1,2-diol und Propan-1,3-diol in einem Mischungsverhältnis von 5 bis 95 Vol.-%;
- Propan-1,2-diol und Butan-1,2-diol in einem Mischungsverhältnis von 5 bis 95 Vol.-%;
- Propan-1,3-diol und Butan-2-ol in einem Mischungsverhältnis von 5 bis 95 Vol.-%;
- Propan-1,3-diol und Butan-1,2-diol in einem Mischungsverhältnis von 5 bis 95 Vol.-%;
- Pentan-1,5-diol und Butan-2-ol in einem Mischungsverhältnis von 5 bis 95 Vol.-%;
- Benzylalkohol und Butan-2-ol in einem Mischungsverhältnis von 5 bis 95 Vol.-%;
- Pentan-1-ol und Butan-2-ol in einem Mischungsverhältnis von 5 bis 95 Vol.-%;
- Pentan-1-ol und Methanol in einem Mischungsverhältnis von 5 bis 95 Vol.-%;
- Cyclopentanol und Butan-2-ol in einem Mischungsverhältnis von 5 bis 95 Vol.-%;
- Cyclopentanol und Propan-1,2-diol in einem Mischungsverhältnis von 5 bis 95 Vol.-%;
- Cyclopentanol und Pentan-1-ol in einem Mischungsverhältnis von5 bis 95 Vol.-%;
- Cyclopentanol und Butan-1,2-diol in einem Mischungsverhältnis von 5 bis 95 Vol.-%;
wobei der angegebene Wert des Mischungsverhältnisses sich jeweils auf den Anteil der erstgenannten Komponente in der Mischung aus beiden Komponenten bezieht.

8. Tieftemperatur-Indikatormischung nach Anspruch 6 oder 7, **dadurch gekennzeichnet, dass** die Komponenten a) und b) aus Propan-1,3-diol, Propan-1,2-diol und Butan-2-ol ausgewählt sind und/oder der Farbstoff aus der Gruppe ausgewählt ist, welche Oil Red, Methylrot, Brillantgrün und Rhodamin B umfasst.

9. Tieftemperatur-Indikatormischung nach Anspruch 8, **dadurch gekennzeichnet, dass** sie Propan-1,2-diol und Butan-2-ol in einem Mischungsverhältnis von 40 bis 60 Vol.-%, oder Propan-1,2-diol und Propan-1,3-diol in einem Mischungsverhältnis von 30 bis 70 Vol.-%, oder Propan-1,3-diol und Butan-2-ol in einem Mischungsverhältnis von 30 bis 70 Vol.-% enthält.

10. Tieftemperatur-Indikatormischung nach einem der Ansprüche 1-9, **dadurch gekennzeichnet, dass** die flüssige Mischung in einem Temperaturbereich von 3-30 °C oder 5-30 °C oberhalb der Schmelztemperatur eine Viskosität in einem Bereich von 10 bis 10⁶ mPa*s, vorzugsweise 10 bis 10⁴ mPa*s, aufweist.

11. Verwendung einer Indikatormischung nach einem der Ansprüche 1-10 zur Anzeige/-Überwachung eines Temperaturübergangs innerhalb eines Temperaturbereichs von -20 °C bis -160 °C, insbesondere -25 °C bis -160 °C oder -50 °C bis -150 °C.

12. Verwendung nach Anspruch 11, **dadurch gekennzeichnet, dass** die Konzentration des Farbstoffs in der Alkoholkomponente so hoch eingestellt ist, dass der Schmelzpunkt der Mischung um mindestens 10 °C, vorzugsweise mindestens 20 °C oder 30-70 °C, höher als der Schmelzpunkt der Mischung ohne Farbstoff liegt.

13. Vorrichtung zur Anzeige/Überwachung eines Temperaturübergangs innerhalb eines Temperaturbereichs von -20 °C bis -160 °C, insbesondere -25 °C bis -160 °C oder-50 °C bis -150 °C,
umfassend mindestens die folgenden Komponenten in mindestens einem abgeschlossenen Raum:
a) einen ersten Teilbereich des Raums, welcher mindestens teilweise mit einer Indikatormischung nach einem der Ansprüche 1-10 gefüllt ist;
b) einen zweiten Teilbereich, der für die Indikatormischung im flüssigen Zustand zugänglich ist und mindestens teilweise mit einem saugfähigen Material gefüllt ist, das gegebenenfalls durch ein Trennelement von der Indikatormischung getrennt ist;
c) gegebenenfalls Mittel zum Durchbrechen des Trennelements, um die Indikatormischung in flüssigem Zustand in Kontakt mit dem saugfähigen Material zu bringen;
sowie gegebenenfalls eine an den ersten Teilbereich angrenzende Barriere, die sich zwischen dem ersten Teilbereich und dem zweiten Teilbereich oder in einem an den ersten Teilbereich angrenzenden Abschnitt des zweiten Teilbereichs befindet, und gegebenenfalls Mittel zum Durchbrechen der Barriere.

14. Vorrichtung nach Anspruch 13, **dadurch gekennzeichnet, dass** sie einen Teil des Deckels oder Bodens oder der Wandung eines Behälters für Gefriergut, insbesondere für eine kryokonservierte biologische Probe, bildet oder diesen darstellt, und/oder **dadurch gekennzeichnet, dass** das saugfähige Material aus der Gruppe ausgewählt ist, welche Cellulosematerialien, partikuläre anorganische Materialien wie Gips, Kreide, poröse Membranen, Gewebe und Gewirke, nano- und mikroporöse Aluminiumoxidschichten, umfasst.

15. Verfahren zur Anzeige/Überwachung eines Temperaturübergangs innerhalb eines Temperaturbereichs von -20 °C bis -160 °C, insbesondere -25° bis -160 °C oder -50 °C bis -150 °C, umfassend
a) Bereitstellen einer Indikatormischung nach einem der Ansprüche 1-10 in einem ersten Teilbereich eines abgeschlossenen Raums, der einen ersten Teilbereich und einen zweiten Teilbereich umfasst, wobei der abgeschlossene Raum gegebenenfalls noch eine an den ersten Teilbereich angrenzende Barriere für die Indikatormischung aufweist, die sich zwischen dem ersten Teilbereich und dem zweiten Teilbereich oder in einem an den ersten Teilbereich angrenzenden Abschnitt des zweiten Teilbereichs befindet;
b) gekühltes Lagern der Indikatormischung bei einer gewünschten Temperatur innerhalb des obigen Temperaturbereichs, bei der die Indikatormischung gefroren ist;
c) gegebenenfalls Veranlassen des Durchbrechens einer Barriere zwischen dem ersten Teilbereich und dem zweiten Teilbereich oder in einem an den ersten Teilbereich angrenzenden Abschnitt des zweiten Teilbereichs nach dem Gefrieren der Indikatormischung;
d) Prüfen, ob sich mindestens ein Teil der Indikatormischung in dem zweiten Teilbereich befindet, was eine mindestens zeitweilige Erhöhung der Temperatur auf mindestens die Schmelztemperatur der Indikatormischung anzeigt.

16. Verfahren zur Anzeige/Überwachung eines Temperaturübergangs innerhalb eines Temperaturbereichs von -20 °C bis -160 °C, insbesondere -25 °C oder -50 °C bis -150 °C, umfassend
a) Bereitstellen einer Vorrichtung nach einem der Ansprüche 13-14, die ein saugfähiges Material umfasst;
b) gekühltes Lagern der Vorrichtung bei einer gewünschten Temperatur innerhalb des obigen Temperaturbereichs, bei der die Indikatormischung gefroren ist;
c) Veranlassen des Durchbrechens eines Trennelements zwischen der Indikatormischung und dem saugfähigen Material nach dem Gefrieren der Indikatormischung;
d) Prüfen, ob mindestens ein Teil der Indikatormischung von dem saugfähigen Material aufgenommen wurde, was eine mindestens zeitweilige Erhöhung der Temperatur auf mindestens die Schmelztemperatur der Indikatormischung anzeigt.

17. Verfahren nach Anspruch 15 oder 16, **dadurch gekennzeichnet, dass** die Vorrichtung eine Barriere und/oder ein saugfähiges Material umfasst und die Anwesenheit von Indikatormischung im zweiten Teilbereich des abgeschlossenen Raumes bzw. im saugfähigen Material anzeigt, dass die Indikatormischung mindestens zeitweise auf eine Temperatur oberhalb der Schmelztemperatur erhöht wurde, bei der die Viskosität der geschmolzenen Indikatormischung einen bestimmten Zielwert unterschreitet, so dass die geschmolzene Indikatormischung die Barriere passieren bzw. von dem saugfähigen Material aufgenommen werden kann.

18. Verfahren nach einem der Ansprüche 15 bis 17 oder Verwendung nach einem der Ansprüche 11 bis 12, **dadurch gekennzeichnet, dass** die Indikatormischung so ausgewählt wird, dass deren Schmelztemperatur oder die Temperatur, bei der die Viskosität der geschmolzenen Indikatormischung einen bestimmten Zielwert unterschreitet, einer vorbestimmten Grenztemperatur, deren Überschreiten überwacht werden soll, entspricht.

19. Verfahren nach Anspruch 18, **dadurch gekennzeichnet, dass** die Indikatormischung so ausgewählt wird, dass deren Viskosität bei der Schmelztemperatur oder einer vorbestimmten Grenztemperatur oberhalb der Schmelztemperatur, deren Überschreiten überwacht werden soll, in einem Bereich liegt, der die Flüssigkeitsaufnahme bzw. den Flüssigkeitstransport durch oder in das saugfähige Material erlaubt, vorzugsweise in einem Bereich von 10 bis 1000 mPa*s.

## Claims

1. Low temperature indicator mixture for indicating/monitoring a temperature transition within a temperature range from -20°C to -160°C, in particular -25°C to -160°C or -50°C to -150°C, which comprises:
at least one dye; and
at least one alcohol, selected from the group which comprises octan-1-ol, nonan-1-ol, propane-1,2-diol, propane-1,3-diol, butane-1,2-diol, butane-1,3-diol, butan-2-ol, pentane-1,5-diol, pentan-1-ol, cyclopentanol, benzyl alcohol; and
wherein the melting temperature of the mixture lies within a temperature range from -20°C to -160°C, in particular -25°C to -160°C or -50°C to -150°C.

2. Low temperature indicator mixture according to Claim 1, **characterised in that** the dye is selected from the group which comprises triphenylmethane dyes, rhodamine dyes, in particular xanthenes, azo dyes as well as phenazine and phenothiazine dyes.

3. Low temperature indicator mixture according to Claim 1 or 2, **characterised in that** the dye is selected from the group which comprises oil red, methyl red, brilliant green and rhodamine B, neutral red, and methylene blue and/or **in that** the alcohol is propane-1,3-diol, propane-1,2-diol or butan-2-ol.

4. Low temperature indicator mixture according to any one of Claims 1-3, **characterised in that** the concentration of the dye in the alcohol component is < 10%, in particular < 1% or < 0.1%, of the saturation concentration.

5. Low temperature indicator mixture according to any one of Claims 1-3, **characterised in that** it comprises or represents a solution of the dye, in particular of rhodamine B, in a concentration in the range of 10-100%, in particular 50-100% or 70-100% of the saturation concentration in the alcohol component, preferably in butan-2-ol, in particular a saturated solution of rhodamine B in butan-2-ol.

6. Low temperature indicator mixture according to any one of Claims 1 to 5, **characterised in that** it comprises at least two different alcohol components:
a) an alcohol selected from the group which comprises octan-1-ol, nonan-1-ol, propane-1,2-diol, propane-1,3-diol, butane-1,2-diol, butane-1,3-diol, butan-2-ol, pentane-1,5-diol, pentan-1-ol, cyclopentanol, benzyl alcohol;
b) an alcohol selected from the group which comprises octan-1-ol, nonan-1-ol, propane-1,2-diol, propane-1,3-diol, butane-1,2-diol, butane-1,3-diol, butan-2-ol, pentane-1,5-diol, pentan-1-ol, cyclopentanol, benzyl alcohol with a lower melting point than the alcohol of component a);
wherein the mixture ratio of components a) and b) is set so that the melting temperature of the mixture lies within a temperature range from -20°C to -160°C, in particular from -25°C to -160°C or -50°C to -150°C.

7. Low temperature indicator mixture according to Claim 6, **characterised in that** it comprises one of the following combinations of components a) and b):
- octan-1-ol and butan-2-ol in a mixture ratio of 5 to 95 vol.-%;
- octan-1-ol and pentan-1-ol in a mixture ratio of 5 to 95 vol.-%;
- octan-1-ol and propane-1,2-diol in a mixture ratio of 5 to 95 vol.-%;
- nonan-1-ol and butan-2-ol in a mixture ratio of 5 to 95 vol.-%;
- nonan-1-ol and propane-1,2-diol in a mixture ratio of 5 to 95 vol.-%;
- nonan-1-ol and pentan-1-ol in a mixture ratio of 5 to 95 vol.-%;
- propane-1,2-diol and butan-2-ol in a mixture ratio of 5 to 95 vol.-%;
- propane-1,2-diol and propane-1,3-diol in a mixture ratio of 5 to 95 vol.-%;
- propane-1,2-diol and butane-1,2-diol in a mixture ratio of 5 to 95 vol.-%;
- propane-1,3-diol and butan-2-ol in a mixture ratio of 5 to 95 vol.-%;
- propane-1,3-diol and butane-1,2-diol in a mixture ratio of 5 to 95 vol.-%;
- pentane-1,5-diol and butan-2-ol in a mixture ratio of 5 to 95 vol.-%;
- benzyl alcohol and butan-2-ol in a mixture ratio of 5 to 95 vol.-%;
- pentan-1-ol and butan-2-ol in a mixture ratio of 5 to 95 vol.-%;
- pentan-1-ol and methanol in a mixture ratio of 5 to 95 vol.-%;
- cyclopentanol and butan-2-ol in a mixture ratio of 5 to 95 vol.-%;
- cyclopentanol and propane-1,2-diol in a mixture ratio of 5 to 95 vol.-%;
- cyclopentanol and pentan-1-ol in a mixture ratio of 5 to 95 vol.-%;
- cyclopentanol and butane-1,2-diol in a mixture ratio of 5 to 95 vol.-%;
wherein the indicated value of the mixture ratio relates in each case to the ratio of the former component in the mixture of both components.

8. Low temperature indicator mixture according to Claim 6 or 7, **characterised in that** components a) and b) are selected from propane-1,3-diol, propane-1,2-diol and butan-2-ol and/or the dye is selected from the group which comprises oil red, methyl red, brilliant green and rhodamine B.

9. Low temperature indicator mixture according to Claim 8, **characterised in that** it contains propane-1,2-diol and butan-2-ol in a mixture ratio of 40 to 60 vol.-%, or propane-1,2-diol and propane-1,3-diol in a mixture ratio of 30 to 70 vol.-%, or propane-1,3-diol and butan-2-ol in a mixture ratio of 30 to 70 vol.-%.

10. Low temperature indicator mixture according to any one of Claims 1-9, **characterised in that** the liquid mixture in a temperature range of 3-30°C or 5-30°C above the melting temperature has a viscosity in a range from 10 to 10⁶ mPa*s, preferably 10 to 10⁴ mPa*s.

11. Use of an indicator mixture according to any one of Claims 1-10 for indicating/monitoring a temperature transition within a temperature range from -20°C to -160°C, in particular -25°C to -160°C or -50°C to -150°C.

12. Use according to Claim 11, **characterised in that** the concentration of the dye in the alcohol component is set so high that the melting point of the mixture is higher than the melting point of the mixture without dye by at least 10°C, preferably at least 20°C or 30-70°C.

13. Device for indicating/monitoring a temperature transition within a temperature range from -20°C to -160°C, in particular -25°C to -160°C or -50°C to -150°C,
comprising at least the following components in at least one closed-off space:
a) a first sub-region of the space which is filled at least partially with an indicator mixture according to any one of Claims 1-10;
b) a second sub-region which is accessible for the indicator mixture in the liquid state and which is at least partially filled with an absorbent material which is separated, where applicable, by a separating element from the indicator mixture;
c) where applicable, means for breaking through the separating element in order to bring the indicator mixture in the liquid state into contact with the absorbent material; and,
where applicable, a barrier which adjoins the first sub-region and which is located between the first sub-region and the second sub-region or in a portion of the second sub-region which adjoins the first sub-region, as well as, where applicable, means for breaking through the barrier.

14. Device according to Claim 13, **characterised in that** it forms a part of the cover or base or the wall of a container for frozen material, in particular for a cryopreserved biological sample, or represents this and/or **in that** the absorbent material is selected from the group which comprises cellulose materials, particulate inorganic materials such as plaster, chalk, porous membranes, fabrics and knitted fabrics, nano- and microporous aluminium oxide layers.

15. Method for indicating/monitoring a temperature transition within a temperature range from -20°C to -160°C, in particular -25°C to -160°C or -50°C to -150°C, comprising
a) providing an indicator mixture according to any one of Claims 1-10 in a first sub-region of a closed-off space which comprises a first sub-region and a second sub-region, wherein the closed-off space also, where applicable, has a barrier, which adjoins the first sub-region, for the indicator mixture which is located between the first sub-region and the second sub-region or in a portion of the second sub-region which adjoins the first sub-region;
b) cooled storage of the indicator mixture at a desired temperature within the above temperature range at which the indicator mixture is frozen;
c) where applicable, causing the breaking through of a barrier between the first sub-region and the second sub-region or in a portion of the second sub-region which adjoins the first region after freezing of the indicator mixture;
d) checking whether at least a part of the indicator mixture is located in the second sub-region which indicates an at least temporary increase in the temperature to at least the melting temperature of the indicator mixture.

16. Method for indicating/monitoring a temperature transition within a temperature range from -20°C to -160°C, in particular -25°C to -160°C or -50°C to -150°C, comprising
a) providing a device according to any one of Claims 13-14 which comprises an absorbent material;
b) cooled storage of the device at a desired temperature within the above temperature range at which the indicator mixture is frozen;
c) bringing about the breaking through of a separating element between the indicator mixture and the absorbent material after freezing of the indicator mixture;
d) checking whether at least a part of the indicator mixture was absorbed by the absorbent material, which indicates an at least temporary increase in the temperature to at least the melting temperature of the indicator mixture.

17. Method according to Claim 15 or 16, **characterised in that** the device comprises a barrier and/or an absorbent material and the presence of indicator mixture in the second sub-region of the closed-off space or in the absorbent material indicates that the indicator mixture was increased at least temporarily to a temperature above the melting temperature at which the viscosity of the melted indicator mixture undershoots a certain target value so that the melted indicator mixture can pass the barrier or be absorbed by the absorbent material.

18. Method according to any one of Claims 15 to 17 or use according to any one of Claims 11 to 12, **characterised in that** the indicator mixture is selected so that its melting temperature or the temperature at which the viscosity of the melted indicator mixture undershoots a certain target value corresponds to a predetermined limit temperature, the exceeding of which should be monitored.

19. Method according to Claim 18, **characterised in that** the indicator mixture is selected so that its viscosity at the melting temperature or a predetermined limit temperature above the melting temperature, the exceeding of which should be monitored, lies in a range which allows the absorption of liquid or transport of liquid through or into the absorbent material, preferably in a range from 10 to 1000 mPa*s.

## Revendications

1. Mélange indicateur de basses températures pour afficher/surveiller une transition de température dans une plage de températures de -20 °C à -160 °C, en particulier de -25 °C à -160 °C ou -50 °C à -150 °C, lequel comprend :
au moins un colorant ; et
au moins un alcool choisi parmi le groupe, lequel comprend de l'octane-1-ol, du nonane-1-ol, du propane-1,2-diol, du propane-1,3-diol, du butane-1,2-diol, du butane-1,3-diol, du butane-2-ol, du pentane-1,5-diol, du pentane-1-ol, du cyclopentanol, de l'alcool benzylique ; et
dans lequel la température de fusion du mélange se situe dans une plage de températures de -20 °C à -160 °C, en particulier -25 °C à -160 °C ou de -50 °C à -150 °C.

2. Mélange indicateur de basses températures selon la revendication 1, **caractérisé en ce que** le colorant est choisi parmi le groupe, lequel comprend des colorants à base de triphénylméthane, des colorants à base de rhodamine, en particulier des xanthènes, des colorants azoïques ainsi que des colorants à base de phénazine et de phénothiazine.

3. Mélange indicateur de basses températures selon la revendication 1 ou 2, **caractérisé en ce que** le colorant est choisi parmi le groupe, lequel comprend de l'huile rouge, du rouge de méthyle, du vert brillant et de la rhodamine B, du rouge neutre et du bleu de méthyle, et/ou l'alcool est du propane-1,3-diol, du propane-1,2-diol ou du butane-2-ol.

4. Mélange indicateur de basses températures selon l'une quelconque des revendications 1-3, **caractérisé en ce que** la concentration du colorant dans le composant d'alcool est < 10 %, en particulier < 1 % ou < 0,1 % de la concentration de saturation.

5. Mélange indicateur de basses températures selon l'une quelconque des revendications 1 - 3, **caractérisé en ce qu'**il comprend ou constitue une solution du colorant, en particulier de rhodamine B, en une concentration dans la plage de 10-100 %, en particulier de 50-100 % ou 70-100 % de la concentration de saturation dans le composant d'alcool, de préférence dans du butane-2-ol, en particulier une solution saturée de rhodamine B dans du butane-2-ol.

6. Mélange indicateur de basses températures selon l'une quelconque des revendications 1 à 5, **caractérisé en ce qu'**il comprend au moins deux différents composants d'alcool :
a) un alcool choisi parmi le groupe, qui comprend de l'octane-1-ol, du nonane-1-ol, du propane-1,2-diol, du propane-1,3-diol, du butane-1,2-diol, du butane-1,3-diol, du butane-2-ol, du pentane-1,5-diol, du pentane-1-ol, du cyclopentanol, de l'alcool benzylique ;
b) un alcool choisi parmi le groupe, qui comprend de l'octane-1-ol, du nonane-1-ol, du propane-1,2-diol, du propane-1,3-diol, du butane-1,2-diol, du butane-1,3-diol, du butane-2-ol, du pentane-1,5-diol, du pentane-1-ol, du cyclopentanol, de l'alcool benzylique, avec un point de fusion plus bas que l'alcool du composant a) ;
dans lequel le rapport de mélange des composants a) et b) est réglé de telle sorte que la température de fusion du mélange se situe dans une plage de températures de -20 °C à -160 °C, en particulier de -25 °C à -160 °C ou -50 °C à -150 °C.

7. Mélange indicateur de basses températures selon la revendication 6, **caractérisé en ce qu'**il comprend une des combinaisons suivantes des composants a) et b) :
- de l'octane-1-ol et du butane-2-ol en un rapport de mélange de 5 à 95 % en vol. ;
- de l'octane-1-ol et du pentane-1-ol en un rapport de mélange de 5 à 95 % en vol. ;
- de l'octane-1-ol et du propane-1,2-diol en un rapport de mélange de 5 à 95 % en vol. ;
- du nonane-1-ol et du butane-2-ol en un rapport de mélange de 5 à 95 % en vol. ;
- du nonane-1-ol et du propane-1,2-diol en un rapport de mélange de 5 à 95 % en vol. ;
- du nonane-1-ol et du pentane-1-ol en un rapport de mélange de 5 à 95 % en vol. ;
- du propane-1,2-diol et du butane-2-ol en un rapport de mélange de 5 à 95 % en vol. ;
- du propane-1,2-diol et du propane-1,3-diol en un rapport de mélange de 5 à 95 % en vol. ;
- du propane-1,2-diol et du butane-1,2-diol en un rapport de mélange de 5 à 95 % en vol. ;
- du propane-1,3-diol et du butane-2-ol en un rapport de mélange de 5 à 95 % en vol. ;
- du propane-1,3-diol et du butane-1,2-diol en un rapport de mélange de 5 à 95 % en vol. ;
- du pentane-1,5-diol et du butane-2-ol en un rapport de mélange de 5 à 95 % en vol. ;
- de l'alcool benzylique et du butane-2-ol en un rapport de mélange de 5 à 95 % en vol. ;
- du pentane-1-ol et du butane-2-ol en un rapport de mélange de 5 à 95 % en vol. ;
- du pentane-1-ol et du méthanol en un rapport de mélange de 5 à 95 % en vol.,
- du cyclopentanol et du butane-2-ol en un rapport de mélange de 5 à 95 % en vol. ;
- du cyclopentanol et du propane-1,2-diol en un rapport de mélange de 5 à 95 % en vol. ;
- du cyclopentanol et du pentane-1-ol en un rapport de mélange de 5 à 95 % en vol. ;
- du cyclopentanol et du butane-1,2-diol en un rapport de mélange de 5 à 95 % en vol. ;
dans lequel la valeur indiquée du rapport de mélange se rapporte respectivement à la fraction du composant mentionné en premier dans le mélange composé des deux composants.

8. Mélange indicateur de basses températures selon la revendication 6 ou 7, **caractérisé en ce que** les composants a) et b) sont choisis parmi le propane-1,3-diol, le propane-1,2-diol et le butane-2-ol et/ou le colorant est choisi parmi le groupe, lequel comprend de l'huile rouge, du rouge de méthyle, du vert brillant et de la rhodamine B.

9. Mélange indicateur de basses températures selon la revendication 8, **caractérisé en ce qu'**il contient du propane-1,2-diol et du butane-2-ol en un rapport de mélange de 40 à 60 % en vol., ou du propane-1,2-diol et du propane-1,3-diol en un rapport de mélange de 30 à 70 % en vol., ou du propane-1,3-diol et du butane-2-ol en un rapport de mélange de 30 à 70 % en vol.

10. Mélange indicateur de basses températures selon l'une quelconque des revendications 1 - 9, **caractérisé en ce que** le mélange liquide présente dans une plage de températures de 3 - 30 °C ou de 5 - 30 °C au-dessus de la température de fusion une viscosité dans une plage de 10 à 10⁶ mPa*s, de préférence 10 à 10⁴ mPa*s.

11. Utilisation d'un mélange indicateur selon l'une quelconque des revendications 1 - 10 pour afficher/surveiller une transition de température dans une plage de températures de -20 °C à -160 °C, en particulier de -25 °C à -160 °C ou de -50 °C à -150 °C.

12. Utilisation selon la revendication 11, **caractérisée en ce que** la concentration du colorant dans le composant à base d'alcool est réglée sur une valeur si élevée que le point de fusion du mélange est plus élevé d'au moins 10 °C, de préférence d'au moins 20 °C ou 30-70 °C, que le point de fusion du mélange sans colorant.

13. Dispositif pour afficher/surveiller une transition de température dans une plage de températures de -20 °C à -160 °C, en particulier de -25 °C à -160 °C ou -50 °C à -150 °C,
comprenant au moins les composants suivants dans au moins un espace hermétiquement fermé :
a) une première zone partielle de l'espace, laquelle est remplie au moins en partie d'un mélange indicateur selon l'une quelconque des revendications 1 - 10 ;
b) une deuxième zone partielle, qui est accessible au mélange indicateur dans l'état liquide et est remplie au moins en partie d'un matériau absorbant, qui est éventuellement séparé par un élément de séparation du mélange indicateur ;
c) éventuellement des moyens pour transpercer l'élément de séparation pour amener le mélange indicateur dans l'état liquide en contact avec le matériau absorbant ;
ainsi qu'éventuellement une barrière jouxtant la première zone partielle, qui se trouve entre la première zone partielle et la deuxième zone partielle ou dans une section, jouxtant la première zone partielle, de la deuxième zone partielle, et éventuellement des moyens pour transpercer la barrière.

14. Dispositif selon la revendication 13, **caractérisé en ce qu'**il forme une partie du couvercle ou du fond ou de la paroi d'un contenant pour des produits de congélation, en particulier pour un échantillon biologique cryoconservé ou constitue celle-ci, et/ou **caractérisé en ce que** le matériau absorbant est choisi parmi le groupe, lequel comprend des matériaux à base de cellulose, des matériaux inorganiques particulaires, comme du plâtre, de la craie, des membranes poreuses, des tissus et des tricots, des couches d'oxyde d'aluminium nanoporeuses et microporeuses.

15. Procédé d'affichage et/ou de surveillance d'une transition de température dans une plage de températures de -20 °C à -160 °C, en particulier de -25 °C à -160 °C ou -50 °C à -150 °C, comprenant
a) la fourniture d'un mélange indicateur selon l'une quelconque des revendications 1 - 10 dans une première zone partielle d'un espace hermétiquement fermé, qui comprend une première zone partielle et une deuxième zone partielle, dans lequel l'espace hermétiquement fermé présente encore une barrière, jouxtant la première zone partielle, pour le mélange indicateur, qui se trouve entre la première zone partielle et la deuxième zone partielle ou dans une section, jouxtant la première zone partielle, de la deuxième zone partielle ;
b) le stockage réfrigéré du mélange indicateur à une température souhaitée dans la plage de températures ci-avant, à laquelle le mélange indicateur est congelé ;
c) éventuellement le déclenchement du transpercement d'une barrière entre la première zone partielle et la deuxième zone partielle ou dans une section, jouxtant la première zone partielle, de la deuxième zone partielle après la congélation du mélange indicateur ;
d) la vérification pour savoir si au moins une partie du mélange indicateur se trouve dans la deuxième zone partielle, ce qui indique une augmentation au moins temporaire de la température sur au moins la température de fusion du mélange indicateur.

16. Procédé pour afficher/surveiller une transition de température dans une plage de températures de -20 °C à -160 °C, en particulier de -25 °C ou -50 °C à -150 °C, comprenant
a) la fourniture d'un dispositif selon l'une quelconque des revendications 13 - 14, qui comprend un matériau absorbant ;
b) le stockage réfrigéré du dispositif à une température souhaitée dans la plage de températures ci-avant, à laquelle le mélange indicateur est congelé ;
c) le déclenchement du transpercement d'un élément de séparation entre le mélange indicateur et le matériau absorbant après la congélation du mélange indicateur ;
d) la vérification si au moins une partie du mélange indicateur a été absorbée par le matériau absorbant, ce qui indique une augmentation au moins temporaire de la température sur au moins la température de fusion du mélange indicateur.

17. Procédé selon la revendication 15 ou 16, **caractérisé en ce que** le dispositif comprend une barrière et/ou un matériau absorbant et la présence de mélange indicateur dans la deuxième zone partielle de l'espace hermétiquement fermé ou dans le matériau absorbant indique que le mélange indicateur a été augmenté au moins de manière temporaire sur une température au-dessus de la température de fusion, à laquelle la viscosité du mélange indicateur fondu reste inférieure à une valeur cible définie de sorte que le mélange indicateur fondu peut traverser la barrière ou peut être absorbé par le matériau absorbant.

18. Procédé selon l'une quelconque des revendications 15 à 17 ou utilisation selon l'une quelconque des revendications 11 à 12, caractérisé ou **caractérisée en ce que** le mélange indicateur est choisi de telle sorte que sa température de fusion ou la température à laquelle la viscosité du mélange indicateur fondu reste inférieure à une valeur cible définie, correspond à une température limite prédéfinie, dont le dépassement doit être surveillé.

19. Procédé selon la revendication 18, **caractérisé en ce que** le mélange indicateur est choisi de telle sorte que sa viscosité à la température de fusion ou à une température limite prédéfinie supérieure à la température de fusion, dont le dépassement doit être surveillé, se situe dans une plage, qui permet l'absorption de liquide ou le transport de liquide par ou dans le matériau absorbant, de préférence dans une plage de 10 à 1000 mPa*s.
